# FASCICULE DE BREVET EUROPEEN

(11) **EP 2 406 093 B1**
(45) Date de publication et mention de la délivrance du brevet: **17.04.2013**
(21) Numéro de dépôt: 10712450.5
(22) Date de dépôt: 08.03.2010
(51) Int. Cl.: B60J 7/08, B60J 7/16, B60P 3/42, B60P 7/02, B60R 5/04, B60R 13/06, B60R 13/07, B62D 25/10

(54) **PROFILE POUR ELEMENT DE FERMETURE DE BENNE DE VEHICULE ET ELEMENT DE FERMETURE CORRESPONDANT**
PROFIL FÜR DAS ABDECKELEMENT EINER LADEFLÄCHE EINES FAHRZEUGS UND ZUGEHÖRIGES ABDECKELEMENT
PROFILE FOR THE COVER ELEMENT OF A VEHICLE LOAD PLATFORM AND CORRESPONDING COVER ELEMENT

(30) Priorité: 11.03.2009 FR 0901123
(43) Date de publication de la demande: 18.01.2012
(73) Titulaire: Upstone, 06410 Biot (FR)
(72) Inventeur: ANFOSSO, Nicolas, F-06600 Antibes (FR)
(74) Mandataire: Corret, Hélène
(86) Numéro de dépôt international: PCT/FR2010/000192
(87) Numéro de publication internationale: WO 2010/103200

(56) Documents cités:
- US-A- 4 776 629
- US-A- 4 807 921
- US-A1- 2004 051 339
- US-A1- 2007 035 151
- US-A1- 2008 143 292

## Description

L'invention concerne un élément de fermeture de benne de véhicule, du type pick-up.

Un tel élément de fermeture est communément dénommé « tonneau cover ».

Il peut être réalisé en une seule pièce par moulage.

Il peut également consister en un panneau central entouré d'un profilé périphérique. Ce dernier est conçu pour venir en contact avec la partie supérieure des parois de la benne pour assurer sa fermeture.

Le profilé comporte une rainure du côté intérieur, ou encore, vers l'intérieur de l'élément de fermeture, dans laquelle le panneau est posé. La fixation du panneau est ensuite assurée par des rivets.

Du fait de cet assemblage bord à bord, des joints d'étanchéité sont prévus entre le panneau central et le profilé pour éviter que l'eau ne pénètre dans la benne du véhicule. Cette étanchéité peut par exemple, être assurée par de la colle ou du silicone.

Les éléments de fermeture résultant de l'assemblage d'un panneau central et d'un profilé périphérique posent cependant deux problèmes. Tout d'abord, la pose d'un joint d'étanchéité représente un coût supplémentaire, notamment en termes de main d'oeuvre. De plus, on constate que l'étanchéité n'est pas assurée pendant toute la durée de vie du tonneau cover, du fait de la dégradation des propriétés du joint d'étanchéité.

Le document US-A-4 776 629 décrit un profilé pour élément de fermeture de benne de véhicule, du type pick-up, le profilé présentant un contour extérieur continu et comportant, sur sa face interne, une fente pour le passage de panneaux et leur maintien à l'intérieur du profilé, et une chambre étanche, destinée à recueillir l'eau susceptible de pénétrer par la fente, cette chambre étant délimitée, du côté inférieur, par une paroi continue, et le profilé comprenant, en outre, des moyens d'évacuation, en communication avec la chambre.

L'invention a pour objet de pallier ces inconvénients en proposant un profilé de conception particulière.

Ainsi, l'invention concerne un profilé pour un élément de fermeture de benne de véhicule, de type pick-up, comprenant un panneau central rigide et un profilé sur la périphérie dudit panneau, le profilé présentant un contour extérieur continu et comportant, sur sa face interne, une languette détachable et une fente pour le passage d'un panneau et son maintien à l'intérieur du profilé, ladite fente débouchant du côté interne du profilé après retrait de ladite languette et une chambre étanche destinée à recueillir l'eau susceptible de pénétrer par la fente, cette chambre étant délimitée, du côté inférieur, par une paroi continue et le profilé comprenant, en outre, des moyens d'évacuation, en communication avec ladite chambre.

Ce profilé est donc conçu d'une part, pour permettre le montage du panneau central d'un élément de fermeture dans une fente et d'autre part, pour recueillir l'eau à l'intérieur du profil puis l'évacuer en dehors du véhicule.

Cette solution consiste donc non à empêcher l'eau de pénétrer dans le profilé mais à guider l'eau à l'intérieur du profilé pour ensuite l'évacuer à l'extérieur de la benne. De cette façon, la pose d'un joint d'étanchéité entre le profilé et le panneau central est rendue inutile et l'étanchéité est bien assurée pendant toute la durée de vie du tonneau cover puisque celle-ci ne dépend plus d'un élément pouvant se dégrader au cours du temps.

De façon préférée, ces moyens d'évacuation comprennent une gouttière située du côté externe du profilé et à un niveau inférieur à celui de la fente.

De surcroît, cette gouttière comporte avantageusement au moins une ouverture pour l'évacuation de l'eau.

Egalement de façon préférée, le profilé comporte, sur sa face inférieure, une rainure destinée à recevoir un joint d'étanchéité.

L'invention concerne également un élément de fermeture comportant un panneau central rigide et au moins deux profilés conformes à l'invention de façon à entourer ledit panneau, ce dernier étant inséré à l'intérieur des fentes desdits profilés et maintenu fixe.

On comprend qu'au moins deux profilés distincts sont nécessaires pour permettre l'insertion du panneau dans les fentes.

De façon préférée, le panneau est fixé sur le profilé par l'intermédiaire de rivets.

Dans une variante de réalisation, lesdits au moins deux profilés sont liés entre eux, au niveau d'au moins un angle du panneau, par des moyens de raccordement.

Dans ce cas, des moyens d'étanchéité sont prévus entre les profilés et les moyens de raccordement.

Enfin, le panneau central est réalisé en aluminium, en matière plastique ou sous la forme d'un panneau photovoltaïque.

L'invention sera mieux comprise et d'autres buts, avantages et caractéristiques de celle-ci apparaîtront plus clairement à la lecture de la description qui suit et qui est faite au regard des dessins annexés, sur lesquels :
- la figure 1 est une vue en perspective d'un exemple d'élément de fermeture selon l'invention, monté sur la benne d'un véhicule du type pick-up,
- la figure 2 est une vue en coupe transversale d'un profilé selon l'invention, obtenu après extrusion et avant finition,
- la figure 3 est une vue en coupe transversale d'un profilé selon l'invention, dans lequel sont insérés un panneau et un joint périphérique,
- la figure 4 est une vue similaire à la figure 3 qui illustre la circulation de l'eau à l'intérieur du profilé, en cours d'utilisation de l'élément de fermeture et,
- la figure 5 est une vue en perspective et de dessous d'une variante de réalisation du profilé selon l'invention, illustrant l'évacuation de l'eau provenant du profilé.

Les éléments communs aux différentes figures seront identifiés par les mêmes références.

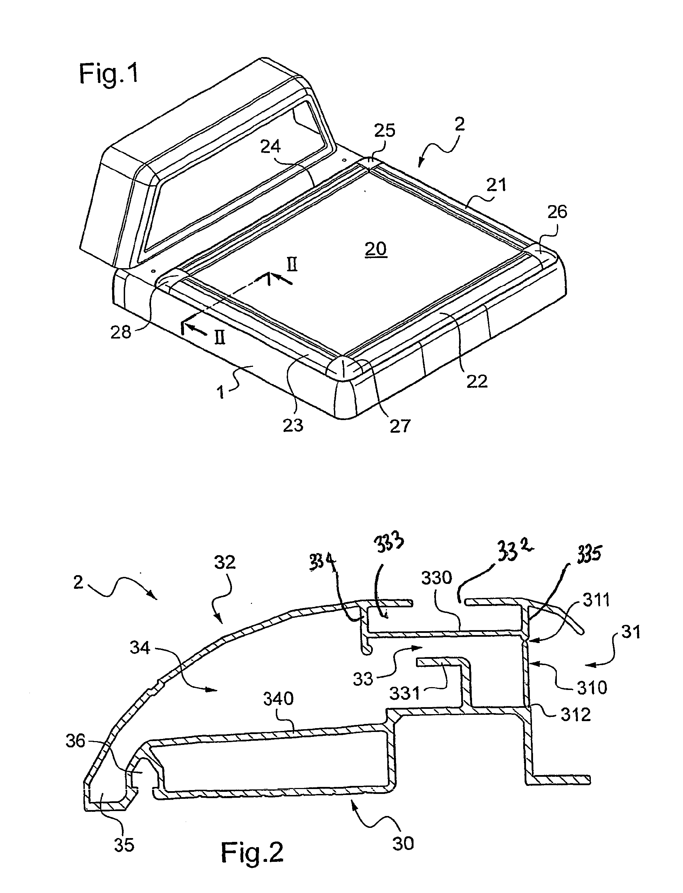

La figure 1 illustre de manière schématique la partie arrière d'un véhicule du type pick-up, comportant une benne 1 sur laquelle est monté un élément de fermeture 2 conforme à l'invention.

Cet élément de fermeture est réalisé à partir d'un panneau central rigide 20 et d'un profilé périphérique. Le panneau est maintenu fixe dans le profilé. L'élément de fermeture est généralement monté de façon articulée sur la benne, pour permettre l'accès à l'intérieur de la benne.

Dans l'exemple illustré à la figure 1, ce profilé périphérique est constitué de quatre parties 21-24 dont la longueur correspond sensiblement à celle d'un côté du panneau, ces différentes parties étant reliées entre elles par des moyens de raccordement 25-28, situés aux angles du panneau.

L'invention n'est pas limitée à ce mode de réalisation. Comme cela apparaîtra dans la suite de la description, il suffit que le profilé soit constitué d'au moins deux parties indépendantes (ou encore que l'élément de fermeture comporte deux profilés) pour permettre l'assemblage du panneau central 20 dans le profilé périphérique.

Le panneau central peut être réalisé en métal (par exemple en aluminium), ou en matière plastique (par exemple en ABS).

On peut également réaliser ce panneau sous la forme d'un panneau photovoltaïque. L'énergie récupérée depuis ce panneau photovoltaïque peut ensuite être utilisée pour l'alimentation du véhicule en électricité.

Ainsi, l'invention concerne également un élément de fermeture pour une benne de véhicule, comportant un panneau central réalisé sous la forme d'un panneau voltaïque et un profilé périphérique quelconque.

La figure 2 montre une section transversale du profilé selon l'invention, c'est-à-dire prise selon la ligne II-II de la figure 1.

Le profilé selon l'invention est classiquement obtenu par un procédé d'extrusion et en aluminium. La figure 2 illustre le profilé à l'issue de ce procédé d'extrusion et avant l'étape de finition permettant son utilisation.

II est réalisé d'une seule pièce. Ceci facilite sa fabrication, en comparaison avec des profilés formés de plusieurs éléments assemblés.

Ce profilé comporte trois faces continues : une face inférieure 30, destinée à être en vis-à-vis de la benne et sensiblement horizontale, en cours d'utilisation de l'élément de fermeture, une face interne 31, destinée à recevoir le panneau central et une face externe 32 qui raccorde la partie supérieure de ia face interne 31 à l'extrémité extérieure de la face inférieure 30.

Ces trois faces sont reliées les unes aux autres, de telle sorte que le contour du profilé est continu.

Cette face externe 32 est visible lorsque l'élément de fermeture est monté sur la benne. C'est pourquoi dans cet exemple de réalisation, la face externe 32 est de forme bombée, pour des raisons esthétiques. D'autres formes pourraient être retenues.

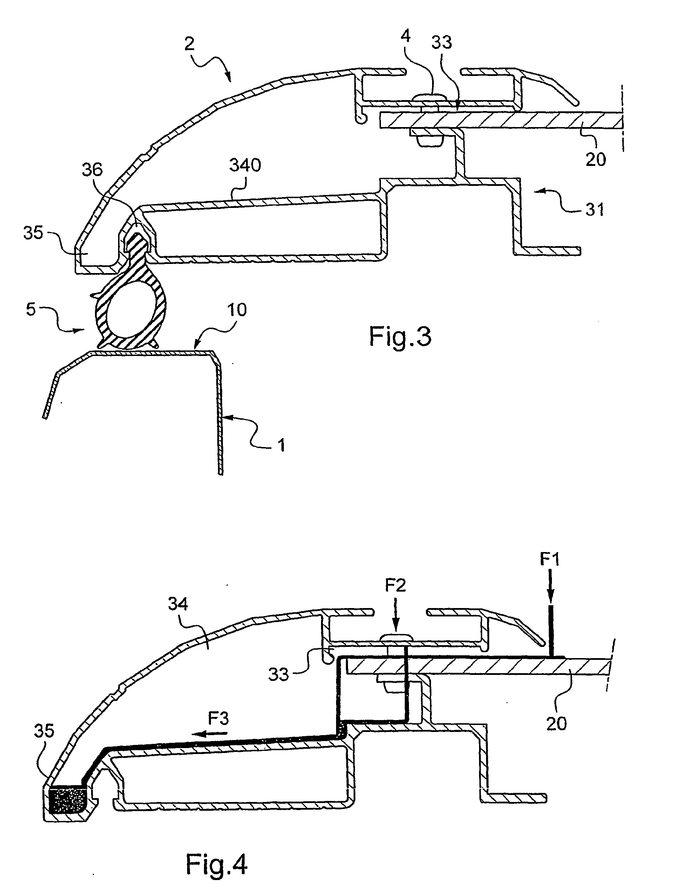

La figure 2 montre que la face interne 31 est continue. Elle comporte, sur toute la longueur du profilé, deux zones d'affaiblissement sensiblement parallèles définissant une languette détachable 310, laquelle s'étend sensiblement perpendiculairement à la face inférieure 30. Ces deux zones correspondent à un rétrécissement. Cependant, après l'étape d'extrusion, la languette 310 de la face intérieure est retirée pour permettre ultérieurement le passage du panneau central, comme cela sera illustré sur la figure 3.

La figure 2 montre que le profilé comporte, du côté de la face interne, ou encore du côté interne, une fente 33, obtenue par extrusion. Cette fente est ménagée entre deux parois 330 et 331 du profilé qui s'étendent parallèlement l'une à l'autre. La fente s'étend sensiblement horizontalement lorsque l'élément de fermeture est placé sur le véhicule. Elle est destinée au passage du panneau central, comme cela est illustré sur la figure 3, après retrait de la languette 310.

Le profilé 2 est également conçu pour définir une chambre étanche 34 entre la fente 33 et une gouttière 35 définie du côté extérieur du profilé. Par chambre étanche, on comprend ici une chambre ne permettant pas le passage de liquide par la face inférieure 30 du profilé. En particulier, aucune ouverture n'est prévue dans la face inférieure 30 qui pourrait permettre le passage de liquide depuis la chambre 34 vers l'extérieur, et donc dans la benne en utilisation.

La chambre 34 est ici définie entre la face externe 32 et une paroi inférieure 340 qui est continue. La paroi 340 est prévue entre la face externe 32 et la face inférieure 30. Elle pourrait être supprimée. La chambre 34 serait alors définie entre la face externe 32 et la paroi inférieure 30. Comme l'illustre la figure 2, la paroi inférieure est légèrement inclinée vers le bas, par rapport aux parois 330 et 331, en direction de la gouttière 35.

Comme illustré sur la figure 2, la gouttière est située entre la face inférieure 30 du profilé et la face externe 32. Comme on le verra dans la suite de la description, la gouttière permet l'évacuation de l'eau qui peut pénétrer dans le profilé, en utilisation. Elle est réalisée d'une pièce avec le profilé.

A la suite de la gouttière 35 et vers l'intérieur du profilé, est prévue une rainure 36 qui ménage une cavité pour un joint d'étanchéité. Ainsi, la face inférieure 30 et la face externe 32 sont reliées entre elles, et de manière continue, par les parois du renfoncement 37 et la gouttière 35.

La figure 3 illustre un profilé similaire à celui de la figure 2, dans lequel la languette 310 de la face interne 31 a été retirée. Du fait de ce retrait sur toute la longueur du profilé, la fente 33 débouche du côté interne. De ce fait, un côté du panneau central 20 de l'élément de fermeture a pu être inséré dans la fente 33 ménagée à l'intérieur du profilé 2.

Le montage du panneau central à l'intérieur du profilé périphérique s'effectue très simplement en faisant coulisser le panneau. On comprend que, pour que ce montage soit possible, le profilé doit être réalisé en au moins deux parties. Dans le mode de réalisation illustré à la figure 1, le panneau central 20 est inséré successivement dans chaque profilé 21 à 24. Les éléments de raccordement 25 à 28 sont ensuite assemblés au niveau de chaque coin du panneau.

La fente 33 permet déjà de maintenir le panneau 20 à l'intérieur du profilé. Cependant, pour assurer sa fixation, des rivets 4 sont prévus. Comme illustré sur la figure 3, ces rivets traversent à la fois le panneau et le profilé, au niveau de la fente 33.

Par ailleurs, la figure 3 illustre un joint d'étanchéité 5 qui est maintenu dans la cavité 36. Ce joint d'étanchéité est destiné à venir en contact avec la partie supérieure 10 des parois de la benne 1.

La cavité 36 étant située entre la gouttière 35 et la face interne 31 du profilé, lorsque l'élément de fermeture est en position de fermeture de la benne, la gouttière 35 est isolée de l'intérieur de la benne, par l'intermédiaire de ce joint d'étanchéité 5.

On se réfèrera maintenant à la figure 4 qui est une vue similaire à la figure 3 et qui illustre la circulation de l'eau à l'intérieur du profilé, en cours d'utilisation de l'élément de fermeture.

Lorsque l'élément de fermeture selon l'invention est en place sur un véhicule, de l'eau peut pénétrer à l'intérieur du profilé, à la fois par la fente 33 (flèche F1), l'eau étant alors guidée par le panneau 20, et le long du rivet 4 (flèche F2).

Cette eau pénètre dans la chambre 34 (flèche F3) et elle est retenue dans la gouttière 35 où elle peut s'accumuler. En pratique, l'eau est conduite jusqu'à la gouttière 35 grâce à l'inclinaison de la paroi inférieure 340 de la chambre 34 et grâce au fait que la gouttière est située à un niveau inférieur à celui de la fente 33, lorsque l'élément de fermeture est placé sur la benne du véhicule.

Comme rappelé plus haut, la paroi inférieure 340 de la chambre 34 est continue, de telle sorte que cette chambre est étanche par rapport à l'intérieur de la benne, lorsque l'élément de fermeture est monté sur celle-ci.

Bien entendu, des moyens sont prévus pour évacuer l'eau de la gouttière 35. Ces moyens peuvent notamment consister en des ouvertures pratiquées dans la gouttière 35. Cependant, ces ouvertures débouchent nécessairement à l'extérieur du véhicule et l'eau ne peut pas pénétrer dans la benne grâce au joint 5.

Le passage de l'eau vers la gouttière 35 s'effectue bien sûr sous l'effet de la gravité mais également du fait des mouvements de la benne, liés aux reliefs rencontrés par le véhicule en roulant.

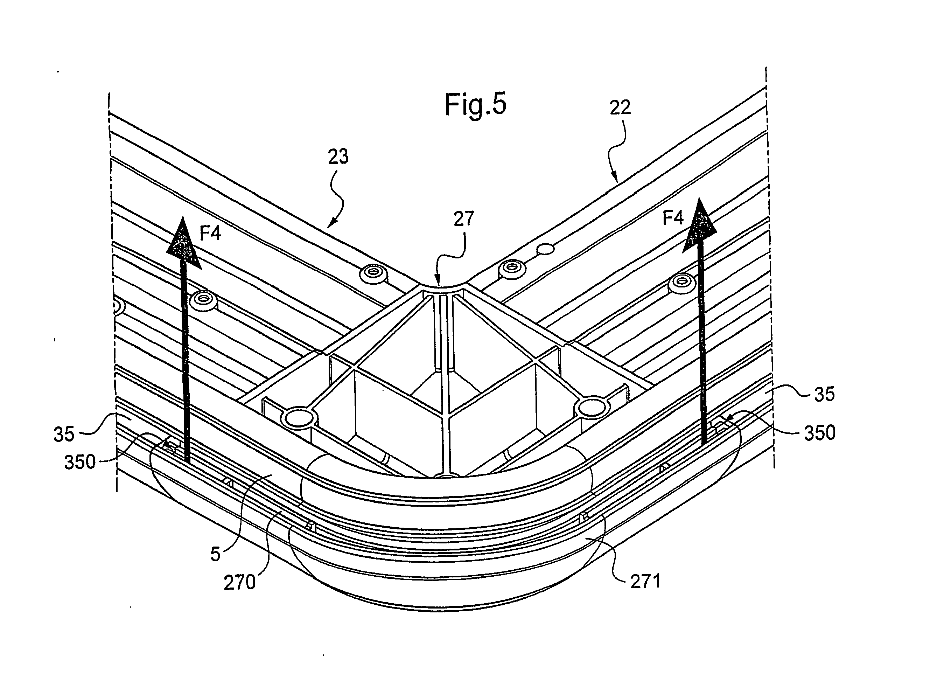

Il est maintenant fait référence à la figure 5 qui illustre l'élément de fermeture 2 de la figure 1, au niveau d'un angle du panneau central 20, en perspective et de dessous.

Cette figure 5 illustre par exemple les parties 22 et 23 du profilé 2 ainsi que le moyen de raccordement 27.

Entre les parties 22, respectivement 23 et le moyen de raccordement 27, sont prévus des éléments d'étanchéité (non illustrés) qui s'étendent sur au moins une partie de l'épaisseur du profilé. Grâce à eux, le passage de l'eau depuis les parties du profilé vers le moyen de raccordement s'effectue par les gouttières de chaque partie.

La figure 5 illustre également le joint d'étanchéité 5, inséré dans la gouttière de chaque partie du profilé, ainsi que dans une cavité du moyen de raccordement 27 qui n'est pas visible sur la figure 5.

La figure 5 montre que chaque partie du profilé est ouverte à chacune de ses extrémités. Ainsi, les gouttières 35 de chaque partie 22 et 23 du profilé sont ouvertes (ouverture 350) aux deux extrémités de chaque partie 22 et 23 et débouchent directement dans une rainure 270 prévue dans le moyen de raccordement 27. Cette rainure 270 est située entre le bord extérieur 271 du moyen de raccordement 27 et le joint d'étanchéité 5. Ainsi, l'eau recueillie dans chaque gouttière 35 peut passer dans la rainure 270 du moyen de raccordement 27 d'où elle tombe par gravité (flèches F4). Ceci permet l'évacuation de l'eau recueillie dans le profilé 2, sans que des ouvertures soient pratiquées dans la gouttière 35 elle-même.

Le profilé illustré à la figure 2 montre que la face externe 32 comporte, au-dessus de la paroi 330, c'est-à-dire du côté interne du profilé, un évidement 332. Ce dernier débouche donc dans une chambre 333 délimitée par la paroi 330 et les parois 334 et 335 qui la raccorde à la face externe 32. Cette chambre 333 peut recevoir des équipements montés coulissant dans cette chambre et notamment des anneaux d'arrimage et des barres de portage.

Par ailleurs, le déposant envisage de protéger, en tant que tel, un élément de fermeture pour benne de véhicule dont le panneau central est du type photovoltaïque.

Les références numériques insérées dans les caractéristiques techniques figurant dans les revendications ont pour seul but de faciliter !a compréhension de ces dernières et ne sauraient en limiter la portée.

## Revendications

1. Profilé pour élément de fermeture de benne de véhicule, du type pick-up, comprenant un panneau central rigide et un profilé sur la périphérie dudit panneau, le profilé présentant un contour extérieur continu et comportant, sur sa face interne, une languette détachable (310) et une fente (33) pour le passage d'un panneau (20) et son maintien à l'intérieur du profilé, ladite fente débouchant du côté interne du profilé après retrait de ladite languette et une chambre (34) étanche, destinée à recueillir l'eau susceptible de pénétrer par la fente, cette chambre étant délimitée, du côté inférieur, par une paroi continue et le profilé comprenant, en outre, des moyens d'évacuation, en communication avec ladite chambre.

2. Profilé selon la revendication 1, dans lequel les moyens d'évacuation comprennent une gouttière (35) située du côté externe du profilé et à un niveau inférieur à celui de ladite fente (33).

3. Profilé selon la revendication 2, dans laquelle ladite gouttière (35) comporte au moins une ouverture (350) pour l'évacuation de l'eau.

4. Profilé selon l'une des revendications 1 à 3, comportant, sur sa face inférieure (30), une rainure (36) destinée à recevoir un joint d'étanchéité (5).

5. Elément de fermeture pour benne de véhicule, du type pick-up, comportant un panneau central rigide (20) et au moins deux profilés selon l'une des revendications 1 à 4, de façon à entourer ledit panneau, ce dernier étant inséré à l'intérieur des fentes (33) desdits profilés et maintenu fixe.

6. Elément de fermeture selon la revendication 5, **caractérisé en ce que** ledit panneau (20) est fixé sur lesdits profilés par l'intermédiaire de rivets (4).

7. élément de fermeture selon l'une des revendications 5 ou 6, **caractérisé en ce que** lesdits au moins deux profilés (21 à 24) sont liés entre eux, au niveau d'au moins un angle du panneau, par des moyens de raccordement (25 à 28).

8. Elément de fermeture selon l'une des revendications 5 à 7, **caractérisé en ce que** des moyens d'étanchéité sont prévus entre les profilés (22, 23) et les moyens de raccordement (27).

9. Elément de fermeture selon l'une des revendications 5 à 8, **caractérisé en ce que** le panneau central (20) est du type photovoltaïque.

10. Elément de fermeture selon l'une des revendications 5 à 8, **caractérisé en ce que** le panneau central (20) est réalisé en aluminium ou en matière plastique.

## Claims

1. A profile for a closing element for the bed of a vehicle, of pick-up type, comprising a rigid central panel and a profile on the periphery of said panel, the profile having a continuous outer contour and comprising, on its inner face, a removable tab (310) and a slot (33) for the passage of a panel (20) and for maintaining said panel inside the profile, said slot opening on the inner side of the profile after the removal of said tab and a sealed chamber (34), intended to collect the water that may enter through the slot, this chamber being delimited, on the bottom side, by a continuous wall and the profile also comprising drainage means, in communication with said chamber.

2. The profile as claimed in claim 1, in which the drainage means comprise a gutter (35) situated on the outer side of the profile and at a level below that of said slot (33).

3. The profile as claimed in claim 2, in which said gutter (35) includes at least one opening (350) for the drainage of the water.

4. The profile as claimed in one of claims 1 to 3, including, on its bottom face (30), a groove (36) intended to receive a watertight seal (5).

5. A closing element for the bed of a vehicle, of pick-up type, comprising a rigid central panel (20) and at least two profiles as claimed in one of claims 1 to 4, so as to surround said panel, the latter being inserted inside the slots (33) of said profiles and held securely.

6. The closing element as claimed in claim 5, **characterized in that** said panel (20) is fixed to said profiles by rivets (4).

7. The closing element as claimed in one of claims 5 or 6, **characterized in that** said at least two profiles (21 to 24) are linked together, at at least one corner of the panel, by connecting means (25 to 28).

8. The closing element as claimed in one of claims 5 to 7, **characterized in that** sealing means are provided between the profiles (22, 23) and the connecting means (27).

9. The closing element as claimed in one of claims 5 to 8, **characterized in that** the central panel (20) is of the photovoltaic type.

10. The closing element as claimed in one of claims 5 to 8, **characterized in that** the central panel (20) is made of aluminum or of plastic material.

## Patentansprüche

1. Profil für ein Element zum Abdecken einer Ladefläche eines Fahrzeugs vom Typ Pickup, mit einer starren mittleren Platte und einem Profil am Umfang der Platte, wobei das Profil eine durchgehende Außenkontur hat und auf seiner Innenfläche eine abnehmbare Lasche (310) und einen Schlitz (33) zum Durchführen einer Platte (20) und zum Halten dieser Platte innerhalb des Profils aufweist, wobei der Schlitz nach dem Entfernen der Lasche auf der Innenseite des Profils mündet, sowie eine dichte Kammer (34), die dazu vorgesehen ist, das Wasser aufzunehmen, das durch den Schlitz eindringen kann, wobei diese Kammer auf der unteren Seite durch eine durchgehende Wand begrenzt ist und das Profil ferner mit der Kammer verbundene Ablaufmittel aufweist.

2. Profil nach Anspruch 1, bei dem die Ablaufmittel eine Rinne (35) umfassen, die auf der Außenseite des Profils und auf einer Höhe unterhalb derjenigen des Schlitzes (33) angeordnet ist.

3. Profil nach Anspruch 2, bei dem die Rinne (35) mindestens eine Öffnung (350) für den Ablauf des Wassers aufweist.

4. Profil nach einem der Ansprüche 1 bis 3, das auf seiner unteren Fläche (30) eine Nut (36) aufweist, die dazu vorgesehen ist, eine Dichtung (5) aufzunehmen.

5. Abdeckelement für eine Ladefläche eines Fahrzeugs vom Typ Pickup, mit einer starren mittleren Platte (20) und mindestens zwei Profilen nach einem der Ansprüche 1 bis 4, so dass diese die Platte umgeben, wobei die Platte in die Schlitze (33) der Profile eingesetzt und feststehend gehalten ist.

6. Abdeckelement nach Anspruch 5, **dadurch gekennzeichnet, dass** die Platte (20) über Niete (4) an den Profilen befestigt ist.

7. Abdeckelement nach einem der Ansprüche 5 oder 6, **dadurch gekennzeichnet, dass** die mindestens zwei Profile (21 bis 24) auf Höhe mindestens eines Winkels der Platte über Verbindungsmittel (25 bis 28) miteinander verbunden sind.

8. Abdeckelement nach einem der Ansprüche 5 bis 7, **dadurch gekennzeichnet, dass** zwischen den Profilen (22, 23) und den Verbindungsmitteln (27) Dichtungsmittel vorgesehen sind.

9. Abdeckelement nach einem der Ansprüche 5 bis 8, **dadurch gekennzeichnet, dass** die mittlere Platte (20) vom Typ Photovoltaikplatte ist.

10. Abdeckelement nach einem der Ansprüche 5 bis 8, **dadurch gekennzeichnet, dass** die mittlere Platte (20) aus Aluminium oder Kunststoffmaterial hergestellt ist.
